# EUROPEAN PATENT APPLICATION

(11) **EP 3 689 828 A1**
(43) Date of publication of application: **05.08.2020**
(21) Application number: 18862158.5
(22) Date of filing: 27.07.2018
(51) Int. Cl.: C02F 1/44, B01D 61/10, B01D 61/12, B01D 61/20, B01D 61/22, G05D 16/08

(54) **LIQUID PURIFICATION SYSTEM**

(30) Priority: 27.09.2017 RU 2017133642
(71) Applicant: Aquaphor Corporation (Aquaphor Corp.), St.Petersburg 197110 (RU)
(72) Inventor: BOCHLIN, Alexander Izevich, Atlit (IL); TATUEV, Yurij Vladimirovich, St.Petersburg 191036 (RU)
(74) Representative: Danubia Patent & Law Office LLC
(86) International application number: PCT/RU2018/000506
(87) International publication number: WO 2019/066683

(57) **Abstract**

The invention relates to systems for membrane purification and/or demineralization with recirculation of liquid, primarily water. The system comprises an untreated liquid line with a pump mounted thereon, a membrane element connected to a purified liquid line and to a liquid recirculation line having a pressure regulator mounted thereon and furthermore being connected to a liquid drainage line, and a controller, and is capable of spontaneously maintaining a pressure of not less than is necessary for carrying out a filtration process as a result of the pressure regulator being in the form of a mechanical spring-loaded valve. Furthermore, untreated liquid is always supplied at a greater ratio rate than the overall rate of removing purified liquid and drainage.

## Description

The invention relates to liquid, predominantly water purification systems of membrane type and/or of desalination type with recirculation used in industry, household and/or drinking water supply in factories, water treatment stations, public institutions, household, country side.

Liquid purification systems of membrane type with recirculation are known from the state of the art. In general, system consists of raw liquid line, membrane element, recirculation line, drainage liquid line and purified liquid line. Raw liquid line connects raw liquid source and the inlet of membrane element. Membrane element has two outlets for purified liquid and for drainage liquid. Outlet for purified liquid of membrane element is connected to the outlet of purified liquid line. Outlet of drainage liquid is connected to the recirculation line. Recirculation line has two outlets: first one is connected to inlet of drainage liquid line, the second - to raw liquid line. Liquid purification systems known form the state of the art operate in the following way. Raw liquid through raw liquid line is supplied to the inlet of membrane element. There filtration process takes place. After it purified liquid flows through purified liquid line to the consumer. Drainage liquid flows to recirculation line, from where it partly returns to raw liquid line and the rest of it is withdrawn out of the system through drainage liquid line. Different pressure and liquid flow velocity control means are installed in such systems to control the necessary ratio between raw, purified and drainage liquids. Such means are controlled manually or automatically.

Liquid purification system described in a patent US 5503735 (published 02.04.1996, priority 26.06.1989, Applicant Water Factory Systems, IPC B01D 61/12) is known from the state of the art. Liquid purification system described in a patent US 5503735 consists of raw liquid line, equipped with the compressor, membrane element, purified liquid line, drainage liquid line, recirculation line, and backwash line. Inlet of membrane element is connected to raw liquid line Outlet of purified liquid of membrane element is connected to purified liquid line, outlet of drainage liquid - to recirculation line, which is equipped with pressure relief valve. This valve is equipped with manual liquid flow speed controller. Drainage line is equipped with restrictor. Inlet of backwash line is connected to recirculation line before pressure reducing valve. Outlet of backwash line is connected to drainage line before restrictor. Flush valve is installed on the backwash line. Drainage line is connected to recirculation line after pressure relief valve. Pressure gauges are installed on the raw liquid line and on recirculation line. Purified liquid line is equipped with flow meter.

Liquid purification system described in a patent US 5503735 operates the following way. Raw liquid through raw liquid line flows into compressor and then into membrane element, where filtration process takes place. Purified liquid through purified liquid line flows through flow meter and enters liquid storage vessel. Drainage liquid flows to recirculation line and through pressure relief valve comes to drainage liquid line. Restrictor placed on the drainage liquid line provides constant liquid flow velocity at different pressure values. Some drainage liquid, flowing through the pressure relief valve does not enter the restrictor, but flows through return valve of recirculation line to compressor inlet. Regularly system goes to flush regime. During this regime backwash valve is opened, compressor continues to pump liquid through membrane element. Nearly all liquid flows along membrane element housing, creating turbulent flow, which cleans membrane element from the dirt. Return valve, installed on recirculation line after pressure relief valve prevents backwash liquid form entering raw liquid line.

Liquid purification system of a patent US 5503735 has two main drawbacks. Restrictor is chosen according to which recycle rate is needed, without any ability to change it. To change recycle rate one has to change restrictor. The filtration efficiency is reached by regulation of pressure relief valve as long as purified liquid velocity or pressure in system reaches its maximum demanded value. From indicated above it is obvious that the system demands fine setting of its parameters to get demanded value of recycle rate, that requires time and constant monitoring of value of recycle rate during all system operating cycle. So the system of a patent US 5503735 is not ergonomic.

Liquid purification system described in international application WO00/58802 (published 05.10.2010, priority 25.03.1999, Applicant Technology Finance Corporation (Proprietary) Limited, IPC G05D 7/06, B01D 61/12, 61/22) is known from the state of the art. Liquid purification system consists of raw liquid line, membrane element, purified liquid line, drainage liquid line, recirculation line and control panel.

Control panel includes control valve, control valve drive, control element, temperature sensor and pressure sensor. Control valve is made with the hole, the size of which can be changed. The control element gets the signal from the pressure sensor and regulates control valve opening rate.

Control element gets pressure and temperature values of liquid flow in lime and using data and opening rate of control valve calculates flow velocity. The signal which is formed according to the difference between flow velocity and calculated value passes to control valve drive. Drive deceases or increases the valve opening rate to decrease or increase flow velocity.

From indicated above it is obvious that the system of international application WO00/58802 is unreliable and has the main drawback - there are no constant parameters in the system, as current velocity and liquid pressure and temperature change while system is working. So the ratio between predetermined velocity and current velocity of liquid flow currently changes too. Control valve constantly changes the size of the hole. For example, if control valve is out of order, the connection between parameters will be immediately lost, and the system will not be able in necessary regime as the functional dependence of liquid flow velocity from control valve position will interrupt. Besides, system operating in regime of constant setting has operational life less than the system operating in regime regulated only once.

Liquid purification system described in patent US 7938956 (published 10.05.2011, priority 12.02.2010, Applicant Millipore Corporation, IPC B01D 17/12) known from the state of the art was chosen as the closest analogue. This system consists of raw liquid line equipped with the pump, membrane element, purification liquid line, drainage liquid line, recirculation line controller. The recirculation line is equipped with manual or automatic pressure regulator. Recirculation line is connected drainage liquid line. There is a deionizator on the purified liquid line and flow regulator placed before it. Flow regulator is made with deforming element. There is a restrictor on the drainage line.

The pump pumps liquid through membrane element at pressure sufficient to provide nominal liquid flow at low temperature.

System of a patent US 7938956 operates in the following manner. Raw liquid along raw liquid line flow into membrane element, where filtration takes place Purified liquid along the purified liquid line flows through flow regulator and then through deionizator goes to consumer. Flow regulator operates in counter pressure with membrane element to maintain predetermined liquid flow velocity through deionizator when the pressure on purified liquid line after membrane element rises. Drainage liquid flows partly to recirculation line and then to raw liquid line and partly flow out of the system through drainage liquid line.

Liquid purification system of a patent US 7938956 has the following drawback. As it was stated earlier pressure regulator in combination with pump maintains constant predetermined pressure in membrane element, which is independent from pressure changes in raw liquid source. When on drainage liwuis line restrictor is partly closed, positive pressure, which occurs on recirculation line will not influence the input pressure of membrane element. So positive pressure in the system of a patent US 7938956 is not at all during operation time. Restrictor demands predetermined setting manual or automatic which leads to errors in system operating regime.

Object of the invention and technical result, achieved when using the invention is the development of new liquid purification system, increase of its ergonomics and stability of its operation.

Problem to solve and demanded technical result are achieved, by that liquid purification system with predetermined ratio between purified and drainage liquid, containing raw liquid line equipped with the pump, membrane element, connected with purified liquid line and recirculation liquid line, equipped with pressure regulator and connected to drainage liquid line, is configured to self-arbitrary pressure maintenance not lower than that necessary for filtration process, owing to pressure regulator is made as mechanical spring-loaded valve, and the ratio of raw liquid supply flow velocity to total withdrawal velocity of purified and drainage liquid always exceeds 1, and there is liquid flow regulator on drainage line, or the ratio between diameters of drainage and purified liquid lines provide constant ratio between liquid flow velocity on drainage line and liquid flow velocity on purified liquid line.

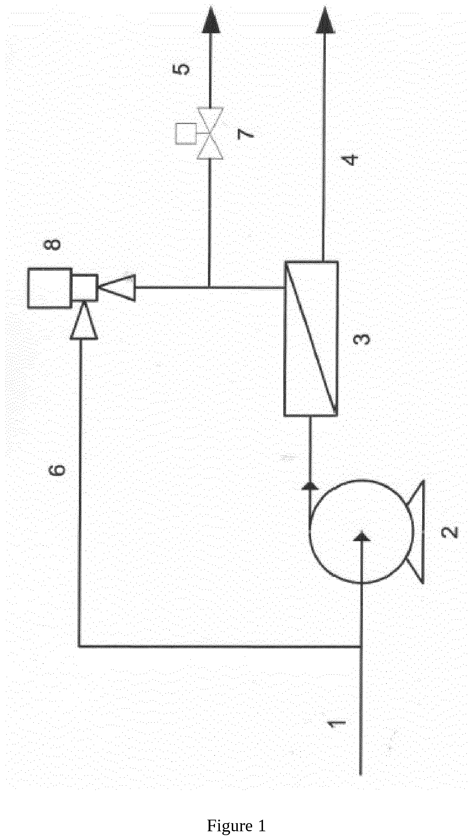

Figures 1 describes a preferred embodiment of the liquid purification system.

The liquid purification system consists of a raw liquid line (1) equipped with a pump (2) connected to a membrane element (3), which has two outlets - an outlet for purified liquid and an outlet for drainage liquid, a purified liquid line (4), a drainage liquid line (5) and a recirculation line (6). The outlet for purified liquid of the membrane element (3) is connected to the purified liquid line (4), the outlet for drainage liquid is connected to the recirculation line (6). The drainage liquid line (5) is equipped with a flow regulator (7). The flow regulator (7) may be made as a servo-driven tap, for example needle or ball. The flow regulator (7) may additionally function as a rapid washing valve of the system before start and after stop of the system. Drainage liquid line (5) is connected to the recirculation line (6) before the flow regulator (7) and to the raw liquid line (1) before the pump (2). A pressure regulator valve (8) is installed on the recirculation line (6) after the drainage liquid line (5) inlet. The pressure regulator valve (8) can be made as a spring-loaded valve, a return spring valve or a disk valve which creates resistance on the recirculation line (6) and provides liquid flow through the drainage liquid line (5). The membrane element (3) may be made as one or several reverse osmosis membranes, or one or several hollow fiber modules. The purified liquid line (4) and the drainage liquid line (5) may be equipped with tranducers or flow-meters (not depicted in the figures). Additionally, at least one prefilter (not depicted in the figures) may be installed on the raw liquid line (1) before the pump (2), made as a carbon block or a bed filter. Additionally, at least one postfilter (not depicted in the figures) may be installed on the purified liquid line (4), made as a hollow fiber module or a carbon block.

The system can additionally be equipped with a control panel (not depicted in the figures), made as, for example, a controller.

Within distinguishing features the claimed system operates as follows. Raw liquid flows along the raw liquid line (1), goes through the pump (2) and into the membrane element (3). Purified liquid flows into the purified liquid line (4). Drainage liquid flows into the recirculation line (6), from where it partly returns to the raw liquid line (1) and partly to the drainage line (5). At the beginning, drainage liquid in greater amount flows along the drainage liquid line (5) out of the system, but as membrane element (3) clogs in a while, more and more amount of liquid flows into the recirculation line (6). At the same time the ratio between the purified liquid and the drainage liquid is the same. It is possible due to two means. As the purified liquid line (4) and the drainage liquid line (5) are both made as pipes, the pipe diameter is chosen so as to keep a necessary ratio between the purified and drainage liquids, for example 4:1 (not depicted in the figure). Or the flow regulator (7) is installed on the drainage liquid line (figure 1), which sets the necessary ratio between the purified and drainage liquids. So independently of the changes in capacity of the membrane elements (3), the amount of purified liquid supplied to the consumer will be constant during system operation time. As with time the capacity of the membrane elements (3) decreases, the amount of liquid which flows to the drainage liquid line (5) will increase. However, at the same time only a predetermined amount of liquid flows along the drainage liquid line (5). So when extra amount of liquid will flow into the inlet of drainage liquid line (5) the pressure will rise. The pressure regulator (8) installed on the recirculation line (6) is made as a spring-loaded valve. The spring in the pressure regulator (8) constricts from the over-pressure of drainage liquid, and the drainage liquid passes through the pressure regulator (8), flows into the recirculation line (6) and then into the pump (2).

Opposed to the closest prior art analogue, the only variable parameter in the claimed invention is the pressure in the recirculation line (6). This pressure is used to create a total flow of the drainage liquid and the raw liquid, providing a ratio between the raw liquid feed velocity and the total velocity of the purified liquid and the drainage liquid withdrawal larger than 1.

The description of the present invention discloses a preferred embodiment of the invention. It can be changed within the claimed set of the claims, so the wide use of the invention is possible.

## Claims

1. A liquid purification system with a predetermined ratio of purified and drainage liquid, comprising a raw liquid line equipped with a pump, a membrane element connected to a purified liquid line and a recirculation line equipped with a pressure regulator and connected to a drainage liquid line, ***characterized in* that** said system is configured to spontaneous pressure maintenance not less than necessary to carry out filtration process due to the fact that the pressure regulator is made as a mechanical spring-loaded valve, and the ratio of the raw liquid feed velocity and the total velocity of the purified liquid and the drainage liquid withdrawal is larger than 1.

2. The liquid purification system according to claim 1, ***characterized in* that** the drainage liquid line is equipped with a liquid flow regulator.

3. The liquid purification system according to claim 1, ***characterized in* that** the ratio of the diameters of the drainage line and the purified liquid line provides a constant ratio of liquid flow velocity on the drainage line and the liquid flow velocity on the purified liquid line.
